# EUROPÄISCHE PATENTSCHRIFT

(11) **EP 2 710 311 B1**
(45) Veröffentlichungstag und Bekanntmachung des Hinweises auf die Patenterteilung: **10.08.2016**
(21) Anmeldenummer: 12722353.5
(22) Anmeldetag: 16.05.2012
(51) Int. Cl.: F25B 17/08

(54) **VERFAHREN ZUM BETREIBEN EINER ZYKLISCH ARBEITENDEN THERMISCHEN ADSORBTIONSWÄRME- ODER -KÄLTEANLAGE UND VORRICHTUNG**
METHOD FOR OPERATING A CYCLICAL THERMAL ADSORPTION HEATING OR REFRIGERATION SYSTEM, AND DEVICE
PROCÉDÉ DE FONCTIONNEMENT D'UNE INSTALLATION DE CHAUFFAGE OU DE REFROIDISSEMENT PAR ADSORPTION THERMIQUE À FONCTIONNEMENT CYCLIQUE, ET DISPOSITIF

(30) Priorität: 19.05.2011 DE 102011102036
(43) Veröffentlichungstag der Anmeldung: 26.03.2014
(73) Patentinhaber: SorTech AG, 06126 Halle (DE)
(72) Erfinder: SOMMER, Sebastian, 06108 Halle (DE); DASSLER, Ingo, 06108 Halle (DE)
(74) Vertreter: Kruspig, Volkmar
(86) Internationale Anmeldenummer: PCT/EP2012/059198
(87) Internationale Veröffentlichungsnummer: WO 2012/156481

(56) Entgegenhaltungen:
- DE-A1- 19 908 666
- DE-A1-102006 043 715
- DE-A1-102007 061 551

## Beschreibung

Die Erfindung betrifft ein Verfahren zum Betreiben einer zyklisch arbeitenden thermischen Adsorptionswärme- oder -kälteanlage nach Anspruch 1.

Zyklisch arbeitende Adsorptionswärme- oder -kälteanlagen beinhalten in ihrem einfachsten Aufbau eine Adsorbereinheit, in welcher ein Kältemittel zyklisch adsorbiert und desorbiert wird, und eine Verdampfer/Kondensatoreinheit, in welcher das Kältemittel in Abhängigkeit vom durchlaufenen Teilschritt entweder kondensiert oder verdampft wird. Sehr oft kommen Adsorptionswärme- oder -kälteanlagen zur Anwendung, die zwei im Gegentakt betriebene Adsorbereinheiten und mindestens einen Kondensator und einen Verdampfer enthalten. Je nachdem, welcher Einsatzzweck mit einer derartigen Anlage verfolgt werden soll, können Adsorptionswärme- oder -kälteanlagen entweder als Wärmepumpe im eigentlichen Sinn, d.h. zum Heizen, oder auch als Kältemaschine, d.h. zum Kühlen, verwendet werden.

In derartigen Anlagen wird ein thermodynamischer Kreisprozess ausgeführt. In der Adsorbereinrichtung befindet sich ein Sorptionsmittel, an die das Kältemittel adsorbiert und desorbiert wird. Das in dem Verdampfer oder der Verdampfer/Kondensatoreinheit in die Dampfphase übergeführte Kältemittel zieht aus der Umgebung Wärme ab und wird in der Adsorbereinrichtung an dem Sorptionsmittel gebunden. Anschließend wird das adsorbierte Kältemittel desorbiert. Hierzu wird von außen Energie, insbesondere Wärmeenergie, der Adsorbereinrichtung zugeführt. Das Kältemittel wird nun aus dem Sorptionsmittel desorbiert und an einen Kondensator oder die nun als Kondensator fungierende Verdampfer/Kondensatoreinheit weiter bzw. zurück geleitet. Nach Abschluss dieses Desorptionsvorgangs wird die Adsorbereinrichtung wieder gekühlt und steht für eine erneute Adsorption zur Verfügung. Gleichzeitig gelangt das verflüssigte Kältemittel von dem Kondensator in den Verdampfer oder verbleibt in der Verdampfer/Kondensatoreinheit und wird erneut in den gasförmigen Zustand überführt, wobei sich der Arbeitszyklus der Adsorptionswärme- oder -kälteanlage schließt.

Im einfachsten Fall besteht die Adsorptionswärme- oder -kälteanlage aus einer einzigen Adsorbereinheit, in der zyklisch adsorbiert und desorbiert wird, wobei auf einem Wärmeübertrager das Kältemittel abwechselnd kondensiert und verdampft wird, und aus der Verdampfer/Kondensatoreinheit, die abwechselnd von der Umgebung Wärme aufnimmt und an die Umgebung Wärme abgibt und in der das Kältemittel sowohl kondensiert als auch verdampft wird.

Bei den technisch betriebenen Adsorptions- und Desorptionsprozessen stellt die Rückgewinnung der dabei ausgetauschten Wärme einen wichtigen Aspekt dar, der die Effizienz der Adsorptionswärme- oder -kälteanlage stark beeinflusst. Ein erheblicher Anteil der zugeführten Wärme wird zum Aufheizen der technischen Komponenten benötigt, die nicht an dem Wärmepumpvorgang als solchem beteiligt sind. Diese stellen eine nicht zu vermeidende thermische Masse mit einer entsprechenden Trägheit dar.

In der DE 10 2006 043 715 A1 wird beispielsweise eine Adsorptionswärmepumpe mit einem Wärmespeicher offenbart, wobei in dem Wärmespeicher gleichzeitig Wärme bei unterschiedlichen Temperaturniveaus gespeichert werden kann.

Ein weiterer wichtiger Aspekt, der für die Effizienz der Adsorptionswärme- oder -kälteanlage von Bedeutung ist, betrifft die so genannte Beladungsbreite des Sorptionsmittels in der oder den Adsorbereinheiten. Die Beladungsbreite gibt an, welcher Anteil des Sorptionsmittels oder gleichbedeutend welcher Anteil der in der Adsorbereinheit vorgegebenen Adsorberfläche für die Sorptionsvorgänge tatsächlich zur Verfügung steht. Die Beladungsbreite wird insbesondere dadurch eingeschränkt, indem gewisse Restbestandteile des Kältemittels im adsorbierten Zustand verbleiben. Die von diesem Restanteil besetzte Sorptionsfläche steht für Adsorptions- und Desorptionsprozesse nicht mehr zur Verfügung und bildet ebenfalls nur eine träge thermische Masse der Adsorptionswärme- oder -kälteanlage.

Aus dem Stand der Technik nach DE 10 2006 011 409 B4 ist ein Verfahren bekannt, mit dem die Wärmerückgewinnung ausgeführt wird. Bei dem Wärmerückgewinnungsverfahren kommen zwei Adsorbereinheiten zum Einsatz, die im Gegentakt betrieben werden. Dabei befinden sich eine erste Adsorbereinheit in der Adsorptionsphase und eine zweite Adsorbereinheit in der Desorptionsphase des Arbeitszyklus. Über ein Wärmeübertragungsmedium wird die in der Desorptionsphase gespeicherte Wärme aus der entsprechenden Adsorbereinheit zur Vorheizung in die in der Adsorptionsphase befindliche zweite Adsorbereinheit überführt. Beide Adsorbereinheiten sind damit über einen geschlossenen oder offenen Wärmeübertragungskreislauf miteinander gekoppelt. Bei dieser Art der Wärmerückgewinnung wird somit Wärme direkt zwischen beiden Adsorbereinheiten ausgetauscht.

Eine Vergrößerung der Beladungsbreite und somit eine Optimierung des Verhältnisses zwischen den thermischen Massen des Kältemittels einerseits und derjenigen der Apparate andererseits erfolgt gemäß dem Stand der Technik dadurch, indem der Desorptionsdruck innerhalb der jeweiligen Adsorbereinheit während der Desorptionsphase zusätzlich abgesenkt wird. Bei Adsorptionswärme- oder -kälteanlagen, die mit zwei im Gegentakt arbeitenden Adsorbereinheiten betrieben werden, werden hierzu die in der Adsorptionsphase und die in der Desorptionsphase befindlichen Adsorbereinheiten kurzzeitig kurzgeschlossen. Dadurch bewirkt die Desorption in einer Einheit eine Steigerung des Adsorptionsdruckes in der anderen Einheit. Das Kältemittel wird gewissermaßen von einer Einheit zur anderen getrieben. Dadurch wird sowohl die Desorption als auch die Adsorption forciert und im Ergebnis erhöht sich die so genannte Beladungsbreite des Sorptionsmittels, es kann somit zumindest effektiver desorbiert und adsorbiert werden. Als Folge davon wird somit mehr Kältemittel für den Prozesskreislauf zurückgewonnen.

Beide Verfahren, sowohl das Betreiben eines Wärmeübertragungskreislaufs zwischen den Adsorbereinheiten als auch das Kurzschließen der Einheiten, sind technisch relativ aufwändig. Sie erfordern jeweils zeitgenau arbeitende Ventilsteuerungen und Messungen verschiedener Prozessparameter, beispielsweise des Drucks und der Temperatur, sowie Regelkreise zum Einstellen und Beibehalten eines optimalen Arbeitspunktes. Beide Verfahren werden daher nur selten gemeinsam realisiert, denn die gemeinsame Realisierung erfordert nun auch ein gegenseitiges Einregulieren des Wärmeübertragungskreislaufs auf die Kurzschlussschaltung für die Adsorbereinheiten.

In der DE 199 08 666 A1 wird ein Verfahren zum Betreiben einer zyklisch arbeitenden thermischen Adsorptionswärem- oder -kälteanlage mit einer Wärmerückgewinnung aus der Verdampfung und der Kondensation des Adsorbats in der Verdampfer/Kondensationseinheit der Anlage offenbart.

Es besteht daher die Aufgabe, ein effizientes Verfahren zum Betreiben einer zyklisch arbeitenden Adsorptionswärme- oder -kälteanlage anzugeben, mit dem auf einfache Weise eine Effizienzsteigerung, insbesondere eine wirksame Rückgewinnung des Kältemittels für den Prozesskreislauf, erreicht werden kann. Darüber hinaus soll die Wärmerückgewinnung in Verbindung mit einer Vergrößerung der Beladungsbreite intensiviert werden.

Die Aufgabe wird mit einem Verfahren zum Betreiben einer zyklisch arbeitenden Adsorptionswärme- oder -kälteanlage der erwähnten gattungsgemäßen Art gelöst, das erfindungsgemäß die kennzeichnenden Merkmale des Anspruchs 1 aufweist. Die Unteransprüche enthalten zweckmäßige und/oder vorteilhafte Ausführungsformen des Verfahrens oder der Vorrichtung.

Das Verfahren zum Betreiben einer zyklisch arbeitenden thermischen Adsorptionswärme- oder -kälteanlage mit einer Desorptionsphase und einer Adsorptionsphase mit mindestens einer Adsorber/Desorbereinheit, einem zyklisch während der Adsorptionsphase adsorbierten und während der Desorptionsphase desorbierten Kältemittel und einer in Abhängigkeit von der Prozessphase als Verdampfer oder als Kondensator wirkenden Verdampfer/ Kondensatoreinheit zeichnet sich dadurch aus, dass durch eine zeitlich parallel ablaufende zyklische Wärmerückgewinnung in einem Wärmerückgewinnungskreislauf mit einem Zwischenspeicher und einem Wärmeübertragungsmedium folgende Verfahrensschritte ausgeführt werden:
Während der Desorptionsphase erfolgt ein Zuleiten des Wärmeübertragungsmediums mit einer niedrigen Temperatur in einen Wärmekontakt mit der Verdampfer/Kondensatoreinheit. Dabei wird das Wärmeübertragungsmedium während des Wärmekontakts erwärmt und es erfolgt am Ende des Zyklus ein Verschieben des erwärmten Wärmeübertragungsmediums in den Zwischenspeicher in einer ersten Zwischenspeicherphase.

Während der Adsorptionsphase erfolgt ein Zuleiten des Wärmeübertragungsmediums in einen Wärmekontakt mit der Verdampfer/Kondensatoreinheit. Dabei wird das Wärmeübertragungsmedium während des Wärmekontakts auf die niedrige Temperatur abgekühlt und es erfolgt am Ende des Zyklus ein Verschieben des abgekühlten Wärmeübertragungsmediums in den Zwischenspeicher in einer zweiten Zwischenspeicherphase.

Grundgedanke des angegebenen Verfahrens ist es somit, während der Adsorptionsphase die Verdampfer/Kondensatoreinheit zusätzlich durch die Zufuhr von Wärmeenergie aufzuheizen, die während der Desorptionsphase an der Verdampfer/Kondensatoreinheit entnommen wurde. Dabei werden zwei Ziele gleichzeitig erreicht. Zum einen wird eine gewisse Wärmemenge innerhalb des thermodynamischen Prozesses gehalten und für das Ausführen der jeweils anderen Phase des Prozesses genutzt. Zum Anderen wird durch das Abführen der Wärmemenge einerseits und durch das Zuführen dieser Wärmemenge andererseits der Desorptionsdruck bzw. der Adsorptionsdruck im System abgesenkt bzw. gesteigert. Das zwischen der Adsorbereinheit und der Verdampfer/Kondensatoreinheit zirkulierende Kältemittel wird beschleunigt kondensiert und damit aus der Adsorbereinheit desorbiert bzw. beschleunigt verdampft und in die Adsorbereinheit zurückgetrieben.

Die so beschriebenen Schritte lassen sich besonders gut bei Adsorptionswärme- oder -kälteanlagen ausführen, bei denen nur eine sowohl zur Desorption als auch zur Adsorption dienende Adsorbereinheit mit einer sowohl zur Kondensation als auch zum Verdampfen des Kältemittels dienenden Verdampfer/Kondensatoreinheit gekoppelt ist. In einem derartigen Fall wird die bei der Desorptionsphase in der Verdampfer/Kondensatoreinheit freigesetzte Kondensationswärme vom Wärmeübertragungsmedium aufgenommen und im Zwischenspeicher gespeichert. Anschließend wird in der darauf folgenden Adsorptionsphase das nun erwärmte Wärmeübertragungsmedium zurück an die Verdampfer/Kondensatoreinheit geführt und nun erneut in den Wärmekontakt gebracht. Die nun in der Verdampfer/Kondensatoreinheit ablaufende Verdampfung wird durch diese zwischengespeicherte Wärme befördert.

Diese zyklische Wärmerückgewinnung ist mit einem Prozess gekoppelt, der zur Erhöhung der Beladungsbreite der Adsorber/Desorbereinheit führt. Dieser Prozess bewirkt ein thermisches Senken des Desorptionsdruckes und/oder ein Erhöhen des Adsorptionsdruckes und umfasst folgende erfindungsgemäßen Verfahrensschritte:
Zur Beeinflussung des Desorptionsdruckes wird während der ersten Zwischenspeicherphase die Verdampfer/Kondensatoreinheit in einen unterhalb der Kondensationstemperatur liegenden Niedertemperaturkontakt gebracht.

Zusätzlich oder als eigener Verfahrensschritt wird zur Beeinflussung des Adsorptionsdruckes während der zweiten Zwischenspeicherphase die Verdampfer/Kondensatoreinheit in einen oberhalb der Verdampfungstemperatur liegenden Mitteltemperaturkontakt gebracht.

Grundgedanke dieser Verfahrensschritte ist es, die Kondensation und/oder die Verdampfung des Kältemittels während der Desorption und/oder während der Adsorption zu befördern, indem die Verdampfer/Kondensatoreinheit zusätzlich gekühlt oder geheizt wird. Als Voraussetzung dafür müssen definierte Temperaturen für das Wärmeübertragungsmedium eingestellt werden, mit denen die entsprechenden Komponenten beaufschlagt werden. Dies geschieht dadurch, indem die Verdampfer/Kondensatoreinheit über das Wärmeübertragungsmedium jeweils thermisch an einen Nieder- bzw. Mitteltemperaturkontakt mit definierten Temperaturen angekoppelt wird.

Zweckmäßigerweise erfolgt eine Speicherung des dabei auf die hohe Temperatur erwärmten und/oder auf die niedrige Temperatur abgekühlten Wärmeübertragungsmediums. Dadurch werden die Wärmerückgewinnung und der Prozess der Erweiterung der Beladungsbreite kombiniert.

Erfindungsgemäß erfolgen die thermische Kopplung der Verdampfer/Kondensatoreinheit mit dem Niedertemperaturkontakt und/oder die thermische Kopplung der Verdampfer/Kondensatoreinheit mit dem Mitteltemperaturkontakt jeweils unmittelbar vor dem Beginn der ersten oder zweiten Zwischenspeicherphase. Das heißt, dass die genannten Komponenten genau dann in die entsprechenden Temperaturkontakte gebracht werden, wenn das Wärmeübertragungsmedium mit der jeweils erforderlichen Temperatur aus dem Zwischenspeicher an die Komponenten herangeführt wird und im Rückfluss mit der jeweils anderen Temperatur wieder in den Zwischenspeicher eintritt. Dadurch weist das Wärmeübertragungsmedium eine definierte Temperatur auf, die sich durch den Kontakt mit der Verdampfer/Kondensatoreinheit ändert.

Zweckmäßigerweise erfolgen die zyklische Wärmerückgewinnung und der Prozess zur Erhöhung der Beladungsbreite ventilgesteuert. Dabei werden die Schaltzeitpunkte der Ventilsteuerung in Abhängigkeit von einer der Verdampfer/Kondensatoreinheit gemessenen ersten Prozesstemperatur, einer am Ausgang des Zwischenspeichers gemessenen zweiten Prozesstemperatur und/oder einer zwischen der ersten und der zweiten Prozesstemperatur ermittelten Temperaturdifferenz bestimmt. Beide kombinierten Prozesse verlaufen daher vollautomatisch und sind in ihrer Taktung auf die konkret vorliegenden Temperaturen im System angepasst.

Bei einer Ausgestaltung des Verfahrens erfolgt eine zyklische Speicherung der Wärme der Desorber/Adsorbereinheit in der Weise, dass das Wärmeübertragungsmedium am Ende der Desorptionsphase auf einem Hochtemperaturniveau und/oder am Ende der Adsorptionsphase auf einem Mitteltemperaturniveau in einen, als zweiten zusätzlichen oder auch ausschließlich ausgeführten Speicher zwischen gespeichert und im darauffolgenden Zyklus wieder zugeführt wird.

Zweckmäßigerweise wird bei der Speicherung des Wärmeübertragungsmediums auf dem Hochtemperaturniveau auf einen Hochtemperaturkontakt zurückgegriffen, wobei das Wärmeübertragungsmedium auf dem Temperaturniveau des Hochtemperaturkontakts zurückgeführt wird.

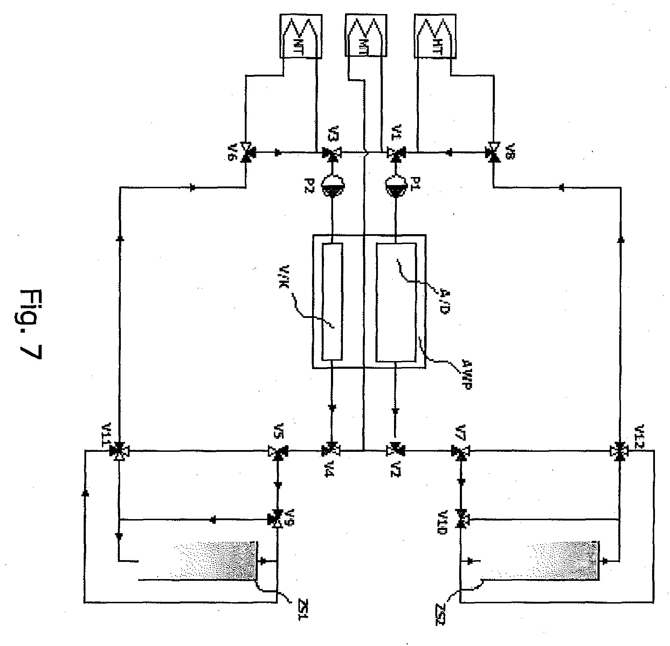

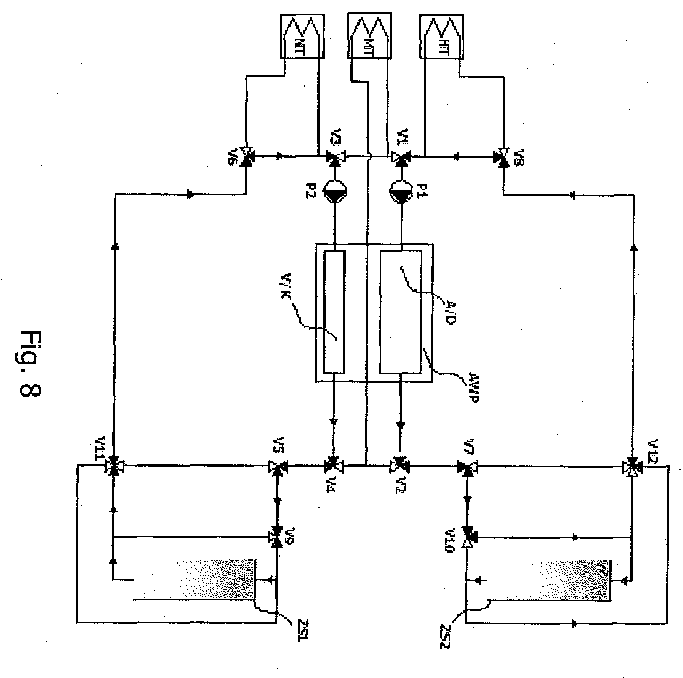

Das Verfahren sollen nachfolgend anhand eines Ausführungsbeispiels näher erläutert werden. Zur Verdeutlichung dienen die beigefügten Figuren 1 bis 8. Es werden für gleiche oder gleich wirkende Teile dieselben Bezugszeichen verwendet.

Es zeigt:
Fig. 1 eine Darstellung des prinzipiellen Ablaufs der Wärmerückgewinnung während der Desorptionsphase,
Fig. 2 eine Darstellung des prinzipiellen Ablaufs der Wärmerückgewinnung während der Adsorptionsphase
Fig. 3 eine Darstellung einer Adsorptionswärme- oder -kälteanlage mit einer Adsorbereinheit und einer Verdampfer/Kondensatoreinheit und dafür vorgesehenen Mitteln zur Sorptionsdruckbeeinflussung während einer Desorptionsphase,
Fig. 4 eine Darstellung der in Fig. 3 gezeigten Anordnung während des Durchlaufens einer Desorptionsdrucksenkung und einer damit kombinierten Wärmezwischenspeicherung.
Fig. 5 eine Darstellung der in den vorhergehenden Figuren gezeigten Anordnung während des Durchlaufens der Adsorptionsphase,
Fig. 6 eine Darstellung der in den vorhergehenden Figuren gezeigten Anordnung während des Durchlaufens Adsorptionsdrucksteigerung mit einer damit kombinierten Wärmezwischenspeicherung,
Fig. 7 eine Darstellung der Wärmerückgewinnung nach der Desorptionsphase mit zwei Speichern und Umkehrung der Speicherdurchströmung und
Fig. 8 eine Darstellung der Wärmerückgewinnung nach der Adsorptionsphase mit zwei Speichern und Umkehrung der Speicherdurchströmung.

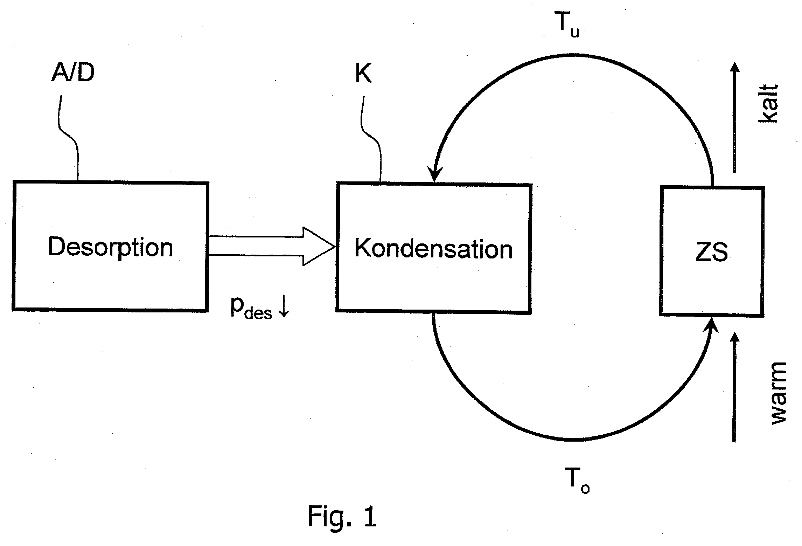

Fig. 1 zeigt eine Darstellung des prinzipiellen Ablaufs des Verfahrens der Wärmerückgewinnung an der Adsorptionswärme- oder -kälteanlage während der Desorptionsphase. Die Adsorptionswärme- oder -kälteanlage besteht aus einer Adsorber/Desorbereinheit A/D, in der sowohl die Adsorption und als auch die Desorption eines Kältemittels erfolgt. Die Adsorber/Desorbereinheit A/D ist mit einer Kondensatoreinheit K gekoppelt, in der das Kältemittel in Abhängigkeit von der jeweiligen Betriebsphase der Adsorptionswärme- oder - kälteanlage kondensiert wird.

Die Wärmerückgewinnung wird in einem Wärmerückgewinnungskreislauf ausgeführt. Dieser enthält einen Zwischenspeicher ZS und ist an die Kondensatoreinheit K thermisch angekoppelt. Innerhalb des Wärmerückgewinnungskreislaufes zirkuliert ein Wärmeübertragungsmedium, beispielsweise Wasser. Die Bewegung des Wärmeübertragungsmediums ist in Fig. 1 durch schwarze Pfeile verdeutlicht. Die Bewegung des Kältemittels innerhalb der eigentlichen Adsorptionswärme- oder -kälteanlage ist durch einen weißen Blockpfeil dargestellt.

Während der Desorption des Kältemittels in der Adsorber/Desorbereinheit A/D gelangt das Kältemittel in die Kondensatoreinheit K und wird dort kondensiert. Das über den Wärmerückgewinnungskreislauf aus dem Zwischenspeicher ZS herangeführte Wärmeübertragungsmedium ist kalt und weist eine Temperatur Tᵤ auf. Das Wärmeübertragungsmedium nimmt über den Wärmekontakt mit der Kondensatoreinheit die abgegebene Kondensationswärme auf. Das dabei auf die Temperatur Tₒ erwärmte Wärmeübertragungsmedium gelangt in den Zwischenspeicher ZS zurück und verdrängt dabei das dort noch verbliebene kalte Wärmeübertragungsmedium. Die durch den Kondensationsprozess abgegebene Wärme ist nun in Form des warmen Wärmeübertragungsmediums im Zwischenspeicher gespeichert.

Gleichzeitig wird während des Beaufschlagens der Kondensatoreinheit K mit dem kalten Wärmeübertragungsmedium die Desorptionsphase in der Adsorber/Desorbereinheit A/D hinaus weiter betrieben und dabei das Kältemittel so vollständig wie möglich aus der Gasphase abgezogen. Dadurch wird der Desorptionsdruck p_{des} innerhalb der Adsorber/Desorbereinheit A/D abgesenkt. Die Desorption läuft dadurch vollständiger und wirkungsvoller ab.

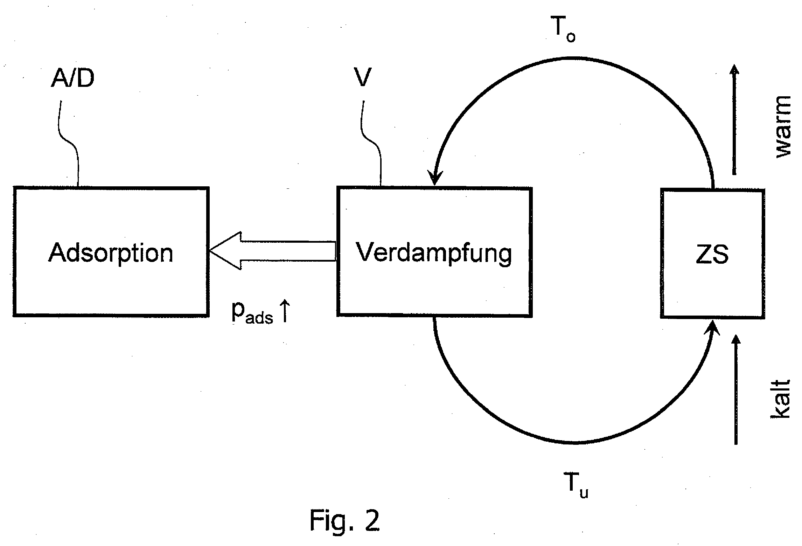

Fig. 2 zeigt eine Darstellung des prinzipiellen Ablaufs des Verfahrens der Wärmerückgewinnung an der Adsorptionswärme- oder -kälteanlage während der Adsorptionsphase. Die Adsorber/Desorbereinheit A/D ist nun mit einem Verdampfer V gekoppelt. Während dieser Phase wird das Kältemittel in dem Verdampfer V verdampft und in der Adsorber/Desorbereinheit A/D wieder adsorbiert. Über den Wärmerückgewinnungskreislauf wird nun das in dem Zwischenspeicher enthaltene warme Wärmeübertragungsmedium mit der Temperatur Tₒ an den Verdampfer V herangeführt. Das Wärmeübertragungsmedium gibt die gespeicherte Wärme dabei über den Wärmekontakt an das verdampfende Kältemittel ab. Dabei sinkt die Temperatur des Wärmeübertragungsmediums wieder auf die Temperatur Tᵤ. Das nun kalte Wärmeübertragungsmedium wird zurück in den Zwischenspeicher ZS geführt und verdrängt das dort noch verbliebene warme Wärmeübertragungsmedium.

Nach dem Durchlaufen des in Fig. 2 gezeigten Prozesses wird somit die während der Desorptionsphase am Kondensator anfallende und zwischengespeicherte Wärme während der Verdampfungsphase an den Verdampfer und somit an die Adsorptionswärme- oder -kälteanlage zurück übertragen und somit für den dort ablaufenden zyklischen Prozess wiedergewonnen.

Zugleich wird die Adsorption innerhalb der Adsorber/Desorbereinheit weiter ausgeführt. Dabei wird durch die forcierte Verdampfung des Kältemittels innerhalb des Verdampfers der Adsorptionsdruck p_{ads} in der Adsorber/Desorbereinheit A/D gesteigert. Die Adsorption wird somit effektiver ausgeführt.

Anhand der prinzipiellen Darstellungen in Fig. 1 und Fig. 2 wird somit deutlich, dass die Wärmerückgewinnung mit einer Beeinflussung der Beladungsbreite der Sorptionsfläche in der Adsober/Desorbereinheit A/D einher geht, die über die beschriebene Beeinflussung des Desorptions- und Adsorptionsdruckes erfolgt.

Zugleich ist anhand der Darstellungen aus Fig. 1 und 2 zu erkennen, dass das Verfahren der Wärmerückgewinnung und der Beeinflussung des Adsorptions- und Desorptionsdruckes auch an Adsorptionswärme- oder -kälteanlagen ausgeführt werden kann, bei denen der Kondensator und der Verdampfer räumlich voneinander getrennt sind.

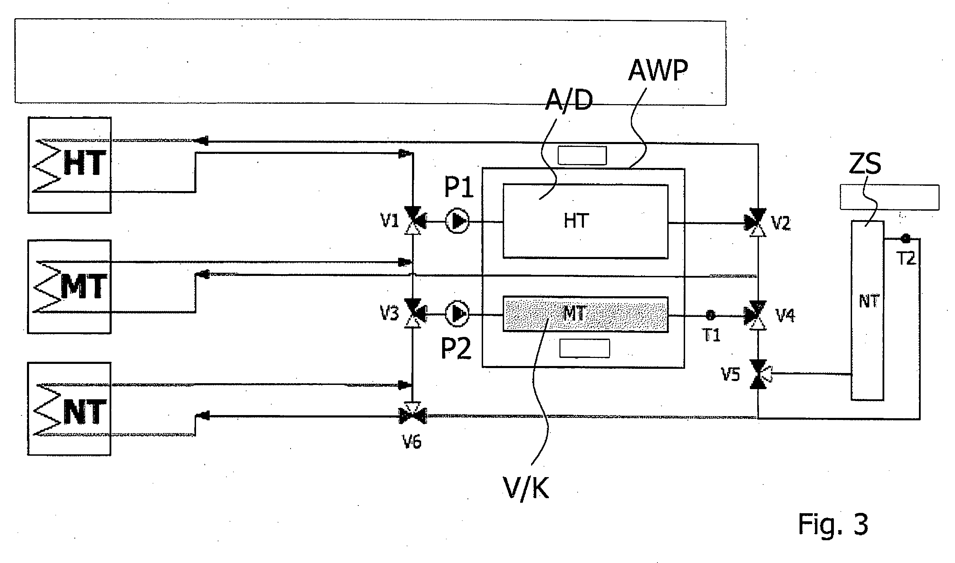

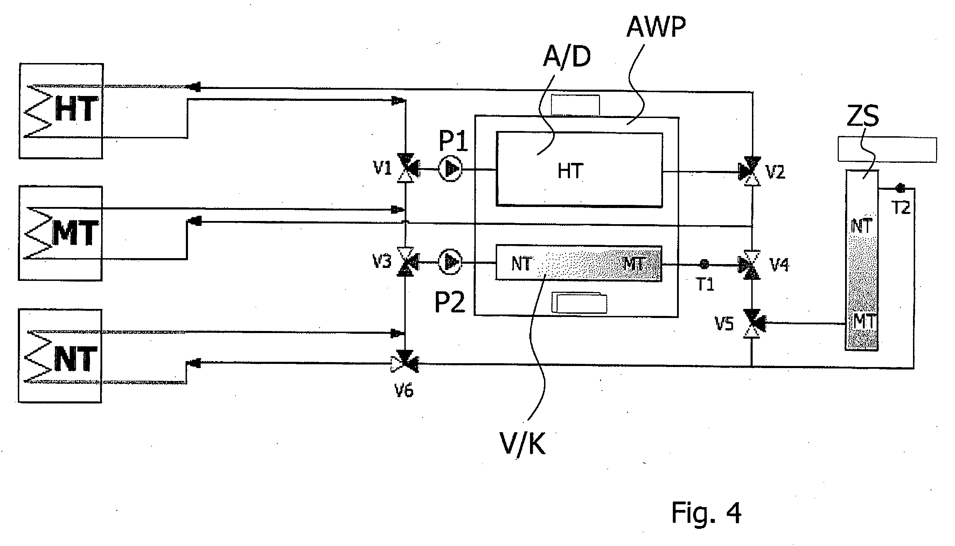

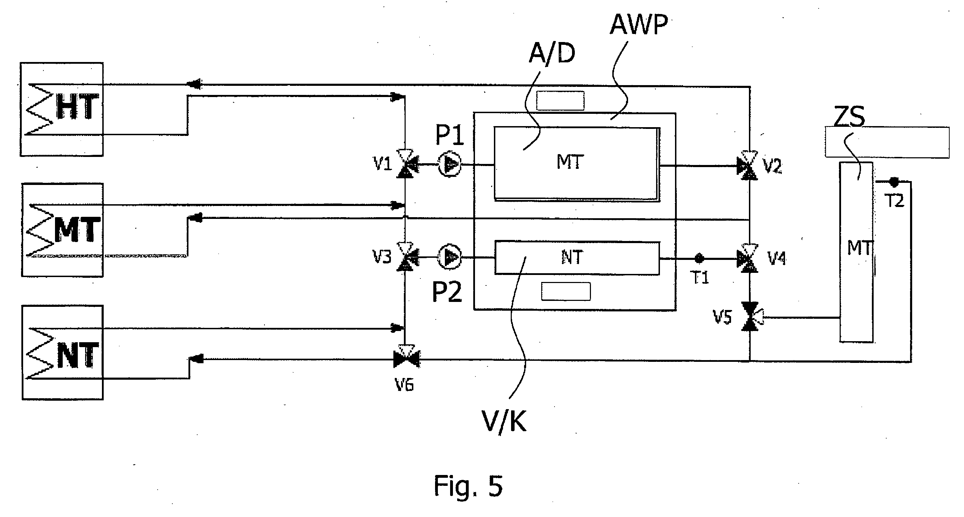

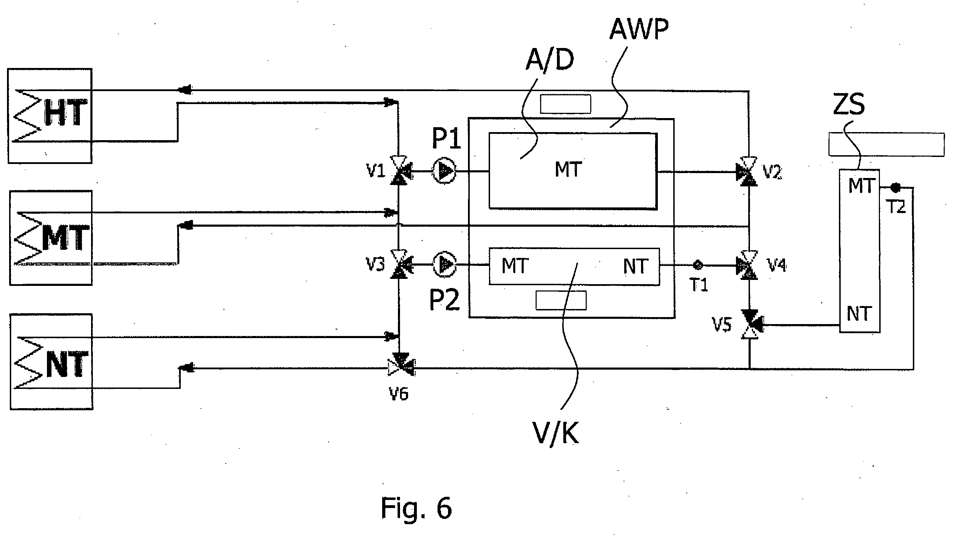

Für eine besonders wirkungsvolle Ausführung der Kombination aus Wärmerückgewinnung und Des- bzw. Adsorptionsdruckbeeinflussung ist es zweckmäßig, das Wärmeübertragungsmedium zumindest kurz vor den einzelnen Phasen des Wärmerückgewinnungsprozesses und der Zwischenspeicherung, d.h. zumindest in einem gewissen Zeitraum während der Betriebsphasen der Adsorptionswärme- oder -kälteanlage auf definierte Temperaturen zu bringen oder auf definierten Temperaturen zu halten. Dies geschieht in den nachfolgend erläuterten Schaltungen, bei denen sowohl die Komponenten der Adsorptionswärme- oder -kälteanlage als auch das Wärmeübertragungsmedium und die Komponenten des Wärmerückgewinnungskreislaufs zyklisch in einen Hochtemperaturkontakt HT, einen Mitteltemperaturkontakt MT und einen Niedertemperaturkontakt NT gebracht werden. Dabei werden durch Ventileinrichtungen zyklisch aufeinander folgend eine in Fig. 3 gezeigte Desorptionsphasenschaltung Des, eine in Fig. 4 dargestellte erste Wärmerückgewinnungsschaltung WR1, eine in Fig. 5 gezeigte Adsorptionsphasenschaltung Ads und eine in Fig. 6 offenbarte zweite Wärmerückgewinnungsschaltung WR2 realisiert.

Fig. 3 zeigt hierfür einen beispielhaften hydraulischen Schaltplan. Die Figur zeigt zugleich eine Ventilstellung für die Desorptionsphasenschaltung Des. Die Schaltung enthält eine Adsorptionswärme- oder -kälteanlage AWP aus einer Adsorber/Desorbereinheit A/D und einer Verdampfer/Kondensatoreinheit V/D. Die Adsorber/Desorbereinheit A/D dient zugleich der Adsorption als auch der Desorption des Kältemittels, während die Verdampfer/Kondensatoreinheit V/K in Abhängigkeit von der jeweiligen Betriebsphase sowohl zur Verdampfung als auch zur Kondensation des Kältemittels genutzt wird. Der Kältemittelkreislauf zwischen der Adsorber/Desorbereinheit A/D und der Verdampfer/Kondensatoreinheit V/K ist hier aus Gründen einer möglichst einfachen Darstellung nicht dargestellt.

Weiterhin ist der Zwischenspeicher ZS vorgesehen. Zum Einstellen definierter Temperaturen dienen drei Wärmekontakte HT, MT und NT. Diese sind als externe Wärmebäder ausgebildet, die von Leitungsabschnitten des Wärmerückgewinnungskreislaufs durchzogen sind. Der Wärmekontakt HT stellt einen Hochtemperaturkontakt mit einer hohen Temperatur T_{HT}, der Wärmekontakt MT einen Mitteltemperaturkontakt mit einer mittleren Temperatur T_{MT} und der Wärmekontakt NT einen Niedertemperaturkontakt mit der niedrigen Temperatur T_{NT} dar. Es gilt somit T_{HT} > T_{MT} > T_{NT}, Das Wärmeübertragungsmedium durchströmt die Wärmekontakte und wird dabei auf die entsprechenden Temperaturen definiert eingestellt. Für diese Temperatureinstellungen werden die Desorptions- und die Adsorptionsphasen der Adsorptionswärme- oder -kälteanlage genutzt.

Während der Wärmerückgewinnungsphasen erfolgt ein zyklisches Ersetzen des entweder auf die Temperatur T_{MT} oder T_{NT} gebrachten Wärmeübertragungsmediums in der Verdampfer/Kondensatoreinheit V/K und ein Verschieben bzw. Freigeben des zwischendurch gespeicherten Wärmeübertragungsmediums in bzw. aus dem Zwischenspeicher ZS.

Die Temperatur des Wärmeübertragungsmediums wird während des Prozessverlaufs mindestens an zwei Punkten registriert. Der erste Temperaturüberwachungspunkt T1 befindet sich am Ausgang der Verdampfer/Kondensatoreinheit V/K, der zweite Temperaturüberwachungspunkt T2 ist am Ausgang des Zwischenspeichers ZS angeordnet.

Das Wärmeübertragungsmedium wird durch zwei Pumpen P1 und P2 umgetrieben. Diese befinden sich jeweils am Eingang der Adsorber/Desorbereinheit A/D sowie am Eingang der Verdampfer/Kondensatoreinheit V/K.

Die verschiedenen zyklusabhängigen Schaltungen und Fließrichtungen des Wärmeübertragungsmediums werden durch Ventile V1, V2, V3, V4, V5 und V6 eingestellt. Der eigentliche Wärmerückgewinnungskreislauf wird dabei durch die Ventile V3 bis V6 gesteuert, während die Ventile V1 und V2 eine definierte Temperatur des Wärmeübertragungsmediums für die Adsorber/Desorbereinheit A/D einstellen.

Sämtliche Ventile sind in diesem Beispiel als Drei-Wege-Ventile ausgebildet. Sie werden von einer hier nicht dargestellten Steuereinrichtung geschaltet. Die Steuereinrichtung und die Ventile sind als Teil eines Regelkreises ausgebildet. Der Regelkreis umfasst jeweils einen Temperatursensor an dem Temperaturüberwachungspunkt T1 und einen Temperatursensor an dem Temperaturüberwachungspunkt T2, sowie eine Einheit zur Berechnung einer Temperaturdifferenz zwischen den an diesen Stellen gemessenen Temperaturwerten. In Abhängigkeit von der gemessenen Temperaturdifferenz werden die nachfolgend erläuterten Phasen beendet oder gestartet. Die Anordnung wird hierzu über die Ventile V1 bis V6 nacheinander in die Desorptionsphasenschaltung, eine erste Wärmerückgewinnungsschaltung, eine Adsorptionsphasenschaltung und eine zweite Wärmerückgewinnungsschaltung gebracht.

Fig. 3 zeigt die Desorptionsphasenschaltung Des. In der Adsorptionswärme- oder -kälteanlage AWP wird innerhalb der Adsorber/Desorbereinheit A/D die Desorptionsphase durchlaufen. Die Adsorber/Desorbereinheit A/D wird dazu in den HT-Wärmekontakt gebracht. Hierzu sind die Ventile V1 und V2 so gestellt, das das Wärmeübertragungsmedium über die Pumpe P1 in einem Kreislauf zwischen dem HT-Temperaturreservoir und der Adsorber/Desorbereinheit A/D umgetrieben wird. Das Kältemittel innerhalb der Adsorptionswärme- oder -kälteanlage wird dabei desorbiert und kondensiert in der Verdampfer/Kondensatoreinheit V/K.

Während des regulären Desorptionsprozesses oder zumindest an dessen Ende wird die Verdampfer/Kondensatoreinheit V/K auf einem mittleren Temperaturniveau T_{MT} gehalten. Das Wärmeübertragungsmedium wird hierzu über die Pumpe P2 über entsprechend gestellte Ventile V3 und V4 in einem Kreislauf zwischen dem MT-Temperaturreservoir und der Verdampfer/Kondensatoreinheit V/K umgetrieben.

Wie aus Fig. 3 hervorgeht, sind sowohl der Zwischenspeicher ZS als auch das Niedertemperaturreservoir NT während der Desorptionsphase vom System abgetrennt.

An die Desorptionsphase schließt sich eine erste Wärmerückgewinnungsphase an. Hierzu realisieren die Ventile V1 bis V6 die in Fig. 4 gezeigte erste Wärmerückgewinnungsschaltung WR1. Die Ventile V1 und V2 bleiben hierzu in der in Fig. 3 gezeigte Stellungen. Die Desorption wird in der Adsorber/Desorbereinheit A/D somit fortgesetzt. Die Verdampfer/Kondensatoreinheit V/K wird über die Ventile V3, V4, V5 und V6 in einen über die Pumpe P2 getriebenen Kreislauf mit dem Zwischenspeicher ZS gebracht.

Während innerhalb der Adsorber/Desorbereinheit A/D der Desorptionsprozess weiterhin andauert, wird die Verdampfer/Kondensatoreinheit V/K aus dem Zwischenspeicher ZS mit dem Wärmeübertragungsmedium beaufschlagt. Das Wärmeübertragungsmedium weist dabei eine Temperatur auf, die der Temperatur T_{NT} des Niedertemperaturreservoirs NT entspricht. Das somit kalte Wärmeübertragungsmedium verdrängt das aus der vorhergehenden Desorptionsphase noch an der Verdampfer/Kondensatoreinheit V/K verbliebene Wärmeübertragungsmedium mit der Temperatur T_{MT} und kühlt damit die Verdampfer/Kondensatoreinheit V/K auf die Temperatur T_{NT} ab. Das an der Verdampfer/Kondensatoreinheit V/K noch verbliebene Wärmeübertragungsmedium mit der Temperatur T_{MT} wird in den Zwischenspeicher ZS verschoben und verdrängt dort das Wärmeübertragungsmedium mit der Temperatur T_{NT}. Es findet somit sowohl an der Verdampfer/Kondensatoreinheit V/K als auch in dem Zwischenspeicher ZS einerseits ein Austausch des warmen Wärmeübertragungsmediums durch das kalte Wärmeübertragungsmedium und andererseits des kalten Wärmeübertragungsmediums durch das warme Wärmeübertragungsmedium statt. Dabei wird die in dem Wärmeübertragungsmedium mit der Temperatur T_{MT} aufgenommene Wärme im Zwischenspeicher gespeichert.

In Verbindung damit wird durch die Abkühlung der Verdampfer/Kondensatoreinheit V/K auf die Temperatur T_{NT} die dort noch ablaufende Kondensation des Kältemittels forciert. Dadurch sinkt der Desorptionsdruck innerhalb der Adsorber/Desorbereinheit A/D, wodurch die dort ablaufende Desorption des Kältemittels verstärkt stattfindet und vervollständigt wird. Die Desorptionsdrucksenkung ermöglicht eine besonders wirksame Nachdesorption nach dem Abschluss der eigentlichen Desorptionsphase und senkt dadurch die Restbeladung der Sorptionsfläche in der Adsorder/Desorbereinheit A/D ab. Die Beladungsbreite wird somit vergrößert.

Der Prozess der kombinierten Wärmerückgewinnung und der Desorptionsdrucksenkung findet dann seinen Abschluss, wenn sowohl an der Stelle T1 als auch an der Stelle T2 eine im Wesentlichen gleiche Temperatur gemessen wird und die Temperaturdifferenz zwischen den Temperaturen an der Stelle T1 und der Stelle T2 ihr Vorzeichen wechselt. Dies ist genau dann der Fall, wenn gerade die im Zwischenspeicher verbliebene Restmenge des Wärmeübertragungsmediums mit der Temperatur T_{NT} den Zwischenspeicher ZS verlassen hat und aus der Verdampfer/Kondensatoreinheit das Wärmeübertragungsmedium mit der Temperatur T_{NT} wieder auszutreten beginnt, nachdem dort das Wärmeübertragungsmedium mit der Temperatur T_{MT} verdrängt worden ist. Unmittelbar darauf werden durch die Steuereinheit die Ventile V1 bis V6 von der ersten Wärmerückgewinnungsschaltung WR1 in die Adsorptionsphasenschaltung Ads umgeschaltet.

Fig. 5 zeigt die Adsorptionsphasenschaltung Ads. Innerhalb der Adsorber/ Desorbereinheit A/D wird die Adsoption des Kältemittels ausgeführt, während innerhalb der Verdampfer/Kondensatoreinheit V/K die Verdampfung des Kältemittels stattfindet. Der Zwischenspeicher ZS enthält das auf die Temperatur T_{MT} erwärmte Wärmeträgermedium und ist von den übrigen Komponenten abgetrennt. Die Ventile V1 und V2 sind so geschaltet, dass die Adsorber/Desorbereinheit A/D mit dem MT-Wärmekontakt gekoppelt ist. Das Wärmeträgermedium wird von der Pumpe P1 in die Adsorber/Desorbereinheit A/D über das Ventil V2 durch den MT-Wärmekontakt über das Ventil V1 zurück zur Pumpe getrieben.

Die Verdampfung des Kältemittels vollzieht sich bei einem geringen Druck und einer niedrigeren Temperatur. Die Verdampfer/Kondensatoreinheit V/K ist mit dem NT-Wärmekontakt gekoppelt. Das Wärmeträgermedium wird von der Pumpe P2 in die Verdampfer/Kondensatoreinheit V/K getrieben und über die entsprechend gestellten Ventile V4, V5 und V6 zu dem NT-Wärmekontakt geführt, bevor es dann über das Ventil V3 zurück zur Pumpe und wieder in die Verdampfer/Kondensatoreinheit V/K gelangt.

An die Adsorptionsphase schließt sich eine zweite Wärmerückgewinnungsphase an. Hierzu werden die Ventile V3, V4, V5 und V6 in die zweite Wärmerückgewinnungsschaltung WR2 gestellt. Die Schaltung WR2 ist in Fig. 6 dargestellt.

Die zweite Wärmerückgewinnungsschaltung dient dazu, die während der ersten Wärmerückgewinnungsphase im Zwischenspeicher ZS gespeicherte Wärme wieder an die Verdampfer/Kondensatoreinheit V/K zurück zu führen. Die Adsorber/Desorbereinheit A/D führt währenddessen weiterhin die Adsorption des Kältemittels aus. Wie aus der Figur 6 zu entnehmen ist, wird die Verdampfer/Kondensatoreinheit V/K von dem Niedertemperaturkontakt NK getrennt und in einen von der Pumpe P2 getriebenen Kreislauf mit dem Zwischenspeicher ZS gebracht. Das in dem Zwischenspeicher ZS enthaltene Wärmeträgermedium mit der Temperatur MT wird nun über das Ventil V6 und das Ventil V3 über die Pumpe in die Verdampfer/Kondensatoreinheit V/K gedrückt und verdrängt das dort vorhandene Wärmeübertragungsmedium mit der Temperatur T_{NT}. Das verdrängte Wärmeübertragungsmedium wird in den Zwischenspeicher ZS geschoben und ersetzt dort das noch verbliebene Wärmeübertragungsmedium mit der Temperatur T_{MT}. Dadurch wird die während der ersten Wärmerückgewinnungsphase gespeicherte Wärme wieder an die Verdampfer/Kondensatoreinheit V/K abgeführt. Währenddessen wird die Temperatur des Wärmeübertragungsmediums an den Stellen T1 und T2 registriert und die Temperaturdifferenz zwischen den beiden Werten bestimmt.

Während der zweiten Wärmerückgewinnungsphase wird innerhalb der Adsorber/Desorbereinheit A/D weiterhin das Kältemittel adsorbiert. Die nun durch das Wärmeübertragungsmedium auf das Temperaturniveau des MT-Wärmekontaktes gehobene Verdampfer/Kondensatoreinheit V/K führt eine forcierte Verdampfung des Kältemittels aus. Dadurch erfolgt ein Abdampfen des Kältemittels in die Gasphase und im Ergebnis eine Adsorptionsdrucksteigerung innerhalb der Adsorber/Desorbereinheit A/D. Das Kältemittel wird dadurch forciert adsorbiert. Als Resultat wird dadurch die Sorptionskapazität der Adsorber/Desorbereinheit A/D stärker genutzt und deren Beladungsbreite vergrößert.

Der Prozess der kombinierten Wärmerückgewinnung und der Adsorptionsdrucksteigerung findet dann seinen Abschluss, wenn sowohl an der Stelle T1 als auch an der Stelle T2 eine im Wesentlichen gleiche Temperatur gemessen wird und die Temperaturdifferenz zwischen den Temperaturen an der Stelle T1 und der Stelle T2 ihr Vorzeichen wechselt. Dies ist genau dann der Fall, wenn gerade die im Zwischenspeicher verbliebene Restmenge des Wärmeübertragungsmediums mit der Temperatur T_{MT} den Zwischenspeicher ZS verlassen hat und aus der Verdampfer/Kondensatoreinheit das Wärmeübertragungsmedium mit der Temperatur T_{MT} wieder auszutreten beginnt, nachdem dort das Wärmeübertragungsmedium mit der Temperatur T_{NT} verdrängt worden ist. Unmittelbar darauf werden durch die Steuereinheit die Ventile V1 bis V6 von der zweiten Wärmerückgewinnungsschaltung WR2 in die Desorptionsphasenschaltung Des gemäß Figur 3 umgeschaltet.

Der gesamte Zyklus aus Desorptionsphase und erster Temperatureinstellung, erster Wärmerückgewinnung und erster Zwischenspeicherung des Wärmeträgers, Adsorptionsphase und zweiter Temperatureinstellung und zweiter Wärmerückgewinnung und zweiter Zwischenspeicherung des Wärmeträgers kann nun erneut durchlaufen werden.

Der in den Figuren beschriebene Grundaufbau kann insbesondere hinsichtlich des Zwischenspeichers vorteilhaft modifiziert sein. Hierzu ist es insbesondere möglich, anstelle des einen Zwischenspeichers je einen Zwischenspeicher für das warme und für das kalte Wärmeübertragungsmedium vorzusehen und diese Zwischenspeicher darüber hinaus thermisch an den Hochtemperaturkontakt HT bzw. den Mitteltemperaturkontakt MT zu koppeln, um so die Wärmerückgewinnung und die Beeinflussung des Adsorptions- und Desorptionsdruckes innerhalb der Temperaturdifferenz zwischen der Temperatur T_{HT} und T_{MT} auszuführen.

Es versteht sich außerdem für einen Fachmann, dass die in den Ausführungsbeispielen erläuterten Verfahrensabläufe prinzipiell auch mit Adsorptionswärme- oder -kälteanlagen ablaufen können, bei denen entweder der Kondensator und der Verdampfer als räumlich getrennte Einrichtungen ausgebildet sind und/oder bei denen zwei Adsorber/Desorbereinheiten vorgesehen sind, die im Gegentakt betrieben werden und deren Kältemittelkreisläufe alternierend auf die Kondensatoren bzw. Verdampfer geschaltet sind. In einem derartigen Fall wird das Wärmeübertragungsmedium in zwei Zwischenspeichern gesammelt und aus diesen Zwischenspeichern alternierend zwischen dem Kondensator und dem Verdampfer verschoben.

Das erfindungsgemäße Verfahren und eine mögliche Vorrichtung zur Durchführung des Verfahrens wurden anhand von Ausführungsbeispielen erläutert. Im Rahmen fachmännischen Handelns sind weitere Ausführungsformen möglich. Diese ergeben sich insbesondere aus den Unteransprüchen.

### Bezugszeichenliste

- Ads: Adsorptionsphasenschaltung
- Des: Desorptionsphasenschaltung
- WR1: erste Wärmerückgewinnungsschaltung
- WR2: zweite Wärmerückgewinnungsschaltung
- AWP: Adsorptionswärme- oder -kälteanlage
- A/D: Adsorber/Desorbereinheit
- K: Kondensator
- V: Verdampfer
- V/K: Verdampfer/Kondensatoreinheit
- HT: Hochtemperaturkontakt
- MT: Mitteltemperaturkontakt
- NT: Niedertemperaturkontakt
- P1: erste Pumpe
- P2: zweite Pumpe
- T1: erster Temperaturüberwachungspunkt
- T2: zweiter Temperaturüberwachungspunkt
- Tₒ: höhere Temperatur
- Tᵤ: niedrigere Temperatur
- V1 bis V12: Ventile
- ZS: Zwischenspeicher

## Patentansprüche

1. Verfahren zum Betreiben einer zyklisch arbeitenden thermischen Adsorptionswärme- oder -kälteanlage mit einer Desorptionsphase und einer Adsorptionsphase mit mindestens einer Adsorber/Desorbereinheit (A/D), einem zyklisch während der Adsorptionsphase adsorbierten und während der Desorptionsphase desorbierten Kältemittel, einer in Abhängigkeit von der Prozessphase als Verdampfer oder als Kondensator wirkenden Verdampfer/Kondensatoreinheit (V/K), umfassend
eine zeitlich parallel ablaufende zyklische Wärmerückgewinnung in einem Wärmerückgewinnungskreislauf mit einem Zwischenspeicher (ZS) und einem Wärmeübertragungsmedium mit folgenden Verfahrensschritten:
- Am Ende der Desorptionsphase:
Zuleiten des Wärmeübertragungsmediums mit einer niedrigen Temperatur (Tᵤ) aus dem Zwischenspeicher (ZS) in einen Wärmekontakt mit der Verdampfer/Kondensatoreinheit (V/K),
- Verschieben des warmen (T₀) Wärmeübertragungsmediums in den Zwischenspeicher (ZS) in einer ersten Zwischenspeicherphase,
- Am Ende der Adsorptionsphase:
Zuleiten des erwärmten Wärmeübertragungsmediums aus dem Zwischenspeicher in einen Wärmekontakt mit der Verdampfer/Kondensatoreinheit (V/K),
- Verschieben kalten (Tᵤ) Wärmeübertragungsmediums in den Zwischenspeicher (ZS) in einer zweiten Zwischenspeicherphase, wobei
die zyklische Wärmerückgewinnung mit einem Prozess zur Erhöhung der Beladungsbreite der Adsorber/Desorbereinheit (A/D) durch ein thermisches Senken des Desorptionsdruckes (p_{des}) und/oder Erhöhen des Adsorptionsdruckes (p_{ads}) gekoppelt ist,
**dadurch gekennzeichnet, dass**
zur Beeinflussung des Desorptionsdruckes (p_{des}) während der ersten Zwischenspeicherphase die Verdampfer/Kondensatoreinheit (V/K) in einen unterhalb der Kondensationstemperatur liegenden Niedertemperaturkontakt (NT) und zur Beeinflussung des Adsorptionsdruckes (p_{ads}) während der zweiten Zwischenspeicherphase die Verdampfer/Kondensatoreinheit (V/K) in einen oberhalb der Verdampfungstemperatur liegenden Mitteltemperaturkontakt (MT) gebracht wird, wobei
die Kopplung der Verdampfer/Kondensatoreinheit (V/K) mit dem Niedertemperaturkontakt (NT) und/oder die Kopplung der Verdampfer/Kondensatoreinheit (V/K) mit dem Mitteltemperaturkontakt (MT) jeweils vor dem Beginn der ersten oder zweiten Zwischenspeicherphase erfolgt.

2. Verfahren nach Anspruch 1,
**dadurch gekennzeichnet, dass**
die zyklische Wärmerückgewinnung und der Prozess zur Erhöhung der Beladungsbreite ventilgesteuert erfolgt, wobei die Schaltzeitpunkte der Ventilsteuerung in Abhängigkeit von einer am Ausgang der Verdampfer/Kondensatoreinheit (V/K) gemessenen ersten Prozesstemperatur (T1), einer am Ausgang des Zwischenspeichers (ZS) gemessenen zweiten Prozesstemperatur (T2) und/oder einer zwischen der ersten und der zweiten Prozesstemperatur ermittelten Temperaturdifferenz (T1-T2) bestimmt werden.

3. Verfahren nach einem der vorhergehenden Ansprüche,
**dadurch gekennzeichnet, dass**
eine zyklische Speicherung der Wärme der Adsorber/Desorbereinheit (A/D) in der Weise erfolgt, dass das Wärmeübertragungsmedium am Ende der Desorptionsphase auf einem Hochtemperaturniveau und/oder am Ende der Adsorptionsphase auf einem Mitteltemperaturniveau in einen zweiten, zusätzlichen Speicher zwischen gespeichert und im darauffolgenden Zyklus wieder zugeführt wird.

4. Verfahren nach Anspruch 3,
**dadurch gekennzeichnet, dass**
bei der Speicherung des Wärmeübertragungsmediums auf dem Hochtemperaturniveau auf einen Hochtemperaturkontakt (HT) zurückgegriffen wird, wobei das Wärmeübertragungsmedium auf dem Temperaturniveau des Hochtemperaturkontakts (HT) zurückgeführt wird.

5. Verfahren nach einem der vorhergehenden Ansprüche,
**dadurch gekennzeichnet, dass**
die Speicher vom Wärmeübertragungsmedium durchströmt und die Durchströmungsrichtung entsprechend der sich in den Speichern einstellenden Temperaturschichtung geändert werden kann.

## Claims

1. A method for operating a cyclically operating thermal adsorption heating or refrigeration system having a desorption phase and an adsorption phase, comprising at least one adsorber/desorber unit (A/D), a refrigerant cyclically adsorbed during the adsorption phase and desorbed during the desorption phase, an evaporator/condenser unit (V/K) that acts as an evaporator or as a condenser depending on the process phase, comprising cyclic heat recovery that occurs in a time-parallel manner in a heat recovery circuit having an intermediate storage unit (ZS) and a heat transfer medium with the following method steps:
- at the end of the desorption phase:
bringing the heat transfer medium having a low temperature (Tᵤ) from the intermediate storage unit (ZS) into thermal contact with the evaporator/condenser unit (V/K);
- shifting the hot (T₀) heat transfer medium into the intermediate storage unit (ZS) in a first intermediate storage phase;
- at the end of the adsorption phase:
bringing the heated heat transfer medium from the intermediate storage unit into thermal contact with the evaporator/condenser unit (V/K);
- shifting the cold (Tᵤ) heat transfer medium into the intermediate storage unit (ZS)
in a second intermediate storage phase, wherein
the cyclic heat recovery is coupled to a process for increasing the loading width of the adsorber/desorber unit (A/D) by thermal lowering of the desorption pressure (p_{des}) and/or increasing the adsorption pressure (p_{ads}),
**characterized in that**
for influencing the desorption pressure (p_{des}) during the first intermediate storage phase the evaporator/condenser unit (V/K) is brought to low-temperature contact (NT) which lies beneath the condensation temperature, and for influencing the adsorption pressure (p_{ads}) during the second intermediate storage phase the evaporator/condenser unit (V/K) is brought to a medium-temperature contact (MT) which lies above the evaporation temperature, wherein the coupling of the evaporator/condenser unit (V/K) to the low-temperature contact (NT) and/or the coupling of the evaporator/condenser unit (V/K) to the medium-temperature contact (NT) respectively occurs before the start of the first or second intermediate storage phase.

2. A method according to claim 1, **characterized in that** the cyclic heat recovery and the process for increasing the loading width occurs in a valve-controlled manner, wherein the switching times of the valve control are determined depending on a first process temperature (T1) measured at the output of the evaporator/condenser unit (V/K), a second process temperature (T2) measured at the output of the intermediate storage unit (ZS), and/or a temperature difference (T1-T2) determined between the first and the second process temperature.

3. A method according to one of the preceding claims, **characterized in that** cyclic storage of the heat of the adsorber/desorber unit (A/D) occurs in the manner that the heat transfer medium is intermediately stored in a second, additional storage unit at the end of the desorption phase at a high-temperature level and/or at the end of the adsorption phase at a medium-temperature level, and is supplied again in the next following cycle.

4. A method according to claim 3, **characterized in that** a high-temperature contact (HT) is used in the storage of the heat transfer medium at the high-temperature level, wherein the heat transfer medium is returned to the temperature level of the high-temperature contact (HT).

5. A method according to one of the preceding claims, **characterized in that** the heat transfer medium flows through the storage units and the direction of flow can be changed according to the temperature stratification occurring in the storage units.

## Revendications

1. Procédé de fonctionnement d'une installation de chauffage ou de refroidissement par adsorption thermique à fonctionnement cyclique, comprenant une phase de désorption et une phase d'adsorption par au moins un ensemble adsorbeur/désorbeur (A/D), un réfrigérant adsorbant cycliquement pendant la phase d'adsorption et désorbant pendant la phase de désorption, un ensemble évaporateur/condenseur (V/K) qui fait office d'évaporateur ou de condenseur en fonction de la phase de processus, comprenant une récupération de chaleur cyclique qui se déroule temporellement en parallèle dans un circuit de récupération de chaleur présentant un réservoir intermédiaire (ZS) et un fluide de transfert thermique, comprenant les étapes suivantes :
- à la fin de la phase de désorption :
l'amenée du fluide de transfert thermique à une faible température (Tᵤ) depuis le réservoir intermédiaire (ZS) en contact thermique avec l'ensemble évaporateur/condenseur (V/K),
- le déplacement du fluide de transfert thermique (T₀) chaud vers le réservoir intermédiaire (ZS) pendant une première phase de stockage intermédiaire,
- à la fin de la phase d'adsorption :
l'amenée du fluide de transfert thermique chauffé depuis le réservoir intermédiaire en contact thermique avec l'ensemble évaporateur/condenseur (V/K),
- le déplacement du fluide de transfert thermique (Tᵤ) froid vers le réservoir intermédiaire (ZS) pendant une seconde phase de stockage intermédiaire, dans lequel
la récupération de chaleur cyclique est couplée à un processus d'augmentation de la largeur de chargement de l'ensemble adsorbeur/désorbeur (A/D) par un abaissement thermique de la pression de désorption (p_{des}) et/ou par une augmentation de la pression d'adsorption (p_{ads}),
**caractérisé en ce que**
pour influencer la pression de désorption (p_{des}) pendant la première phase de stockage intermédiaire, l'ensemble évaporateur/condenseur (V/K) est amené en contact à température faible, inférieure à la température de condensation (NT), et pour influencer la pression d'adsorption (p_{ads}) pendant la seconde phase de stockage intermédiaire, l'ensemble évaporateur/condenseur (V/K) est amené en contact à température moyenne supérieure à la température d'évaporation (MT), dans lequel
le couplage de l'ensemble évaporateur/condenseur (V/K) avec le contact à température faible (NT) et/ou le couplage de l'ensemble évaporateur/condenseur (V/K) avec le contact à température moyenne (MT) s'effectue avant le début de la première ou seconde phase de stockage intermédiaire, respectivement.

2. Procédé selon la revendication 1, **caractérisé en ce que** la récupération de chaleur cyclique et le processus pour augmenter la largeur de chargement sont commandés par une valve, les instants de commutation de la commande à valve étant déterminés en fonction d'une première température de processus (T1), mesurée à la sortie de l'ensemble évaporateur/condenseur (V/K), en fonction d'une seconde température de processus (T2), mesurée à la sortie du réservoir intermédiaire (ZS) et/ou en fonction d'une différence de température (T1 - T2) déterminée entre les première et seconde températures de processus.

3. Procédé selon l'une des revendications précédentes, **caractérisé en ce qu'**un stockage cyclique de la chaleur de l'ensemble adsorbeur/désorbeur (A/D) s'effectue de telle sorte que le fluide de transfert thermique est stocké de façon intermédiaire dans un second réservoir supplémentaire à un haut niveau de température à la fin de la phase de désorption et/ou à un niveau de température moyenne à la fin de la phase d'adsorption, et pendant le cycle suivant il est réinjecté.

4. Procédé selon la revendication 3, **caractérisé en ce que** lors du stockage du fluide de transfert thermique au niveau de température élevée (HT), on a recours à un contact à température élevée (HT), le fluide de transfert thermique étant ramené au niveau de température du contact à température élevée (HT).

5. Procédé selon l'une des revendications précédentes, **caractérisé en ce que** les réservoirs sont susceptibles d'être traversés par le fluide de transfert thermique, et le sens de traversée peut varier en fonction de la stratification des températures qui s'établit dans les réservoirs.
